# EUROPÄISCHE PATENTSCHRIFT

(11) **EP 2 086 790 B1**
(45) Veröffentlichungstag und Bekanntmachung des Hinweises auf die Patenterteilung: **11.12.2013**
(21) Anmeldenummer: 07819486.7
(22) Anmeldetag: 30.10.2007
(51) Int. Cl.: B60N 2/02, B60N 2/225

(54) **VERSTELLEINRICHTUNG, INSBESONDERE FÜR EINEN FAHRZEUGSITZ**
ADJUSTMENT DEVICE, IN PARTICULAR FOR A VEHICLE SEAT
DISPOSITIF DE RÉGLAGE, NOTAMMENT POUR UN SIÈGE DE VÉHICULE

(30) Priorität: 02.11.2006 DE 102006052185; 12.04.2007 DE 102007017617
(43) Veröffentlichungstag der Anmeldung: 12.08.2009
(73) Patentinhaber: Johnson Controls GmbH, 51399 Burscheid (DE)
(72) Erfinder: SCHULZ, Dirk, 42899 Remscheid (DE); HAIDA, Stefan, 42855 Remscheid (DE)
(74) Vertreter: Wolff, Felix
(86) Internationale Anmeldenummer: PCT/EP2007/009453
(87) Internationale Veröffentlichungsnummer: WO 2008/052761

(56) Entgegenhaltungen:
- EP-A- 1 359 051
- WO-A-2006/011649

## Beschreibung

Die Erfindung betrifft eine Verstelleinrichtung, insbesondere für einen Fahrzeugsitz zur Durchführung mindestens einer Verstellfunktion, mit einem Planetengetriebe, das einen Antrieb und einen Abtrieb aufweist und einer Bremseinrichtung, welche von dem Abtrieb auf das Planetengetriebe einwirkende Drehmomente zumindest weitestgehend abhält. Die Erfindung betrifft insbesondere eine Verstelleinrichtung gemäß dem Oberbegriff des Anspruchs 1, wie aus der EP 1 359 051 A2 bekannt.

Weitere Verstelleinrichtungen sind beispielsweise aus US 4, 211,451 A1, DE 32 01 309 A1 sowie der US 2005/0245348 A1 bekannt und sind beispielsweise zum elektrischen oder vorzugsweise manuellen Betätigen einer Einrichtung zur Einstellung der Höhe eines Kraftfahrzeugsitzes geeignet. Die Verstelleinrichtung wandelt dabei ein eingehendes Antriebsdrehmoment in ein höheres Abtriebsdrehmoment um, welches zur Winkelverstellung daran angeschlossener Bauteile, beispielsweise des Sitzhöhenverstellers, genutzt wird. Um von der Antriebseinheit auf das Planetengetriebe wirkende Drehmomente zumindest zu vermindern, weisen die Verstelleinrichtungen Bremseinrichtungen auf. Die aus dem Stand der Technik bekannten Verstelleinrichtungen sind jedoch vergleichsweise kompliziert aufgebaut und/oder schwierig zu montieren.

Es war deshalb die Aufgabe der vorliegenden Erfindung eine Verstelleinrichtung zur Verfügung zu stellen, die die Nachteile des Standes der Technik nicht aufweist.

Gelöst wird die Aufgabe mit einer Verstelleinrichtung zur Durchführung mindestens einer Verstellfunktion, insbesondere zur Verstellung eines Kraftfahrzeugsitzes, mit einem Antrieb in Form eines Planetengetriebes, das einen Planetenträger aufweist, und einem Abtrieb, der von einer Bremseinrichtung bei nicht betätigtem Antrieb festgesetzt ist, wobei der Planetenträger so mit der Bremseinrichtung zusammenwirkt, dass diese wahlweise lösbar ist und der Planetenträger Mittel aufweist, die mit Bremskörpern der Bremseinrichtung entriegelnd zusammenwirken.

Mit der erfindungsgemäßen Verstelleinrichtung können beliebige Verstellungen beispielsweise an einem Kraftfahrzeugsitze vorgenommen werden. Beispielsweise kann mit der erfindungsgemäßen Verstellung die Höhe der Sitzfläche, die Neigung der Rückenlehne relativ zur Sitzfläche sowie die Form des Sitzes verändert werden.

Die erfindungsgemäße Verstellung kann sowohl manuell als auch motorisch angetrieben werden. Die erfindungsgemäße Verstelleinrichtung ist einfacher aufgebaut als Verstelleinrichtungen gemäß dem Stand der Technik und einfacher herzustellen.

Mit der Bremseinrichtung werden Drehmomente, die vom Abtrieb auf das Planetengetriebe wirken, zumindest teilweise, vorzugsweise vollständig abgehalten. Vorzugsweise wirkt die Bremseinrichtung in zwei Drehrichtungen.

Vorzugsweise weist die Bremseinrichtung einen Bremsring und einen Innenring auf, zwischen denen sich ein Spalt befindet, in dem mindestens ein Bremskörper angeordnet ist.

Vorzugsweise sind die Bremskörper paarweise angeordnet und weisen jeweils ein Federmittel auf, das zwischen den Bremskörpern angeordnet ist.

Das Planetengetriebe weist vorzugsweise mindestens zwei Planeten auf, die um ein Sonnenrad und an einem Planetenträger drehbar angeordnet sind. Dieser Planetenträger weist Kraft- und/oder Formschlussmittel, vorzugsweise Vorsprünge oder Einbuchtungen, auf, die mit den Bremskörpern entriegelnd zusammenwirken. Besonders bevorzugt weist der Planetenträger mehrere paarweise angeordnete Vorsprünge auf. Zwischen zwei Paaren von Vorsprüngen ist vorzugsweise jeweils ein Zwischenraum vorhanden.

Vorzugsweise greifen in die Zwischenräume Ansätze an dem Innenring spielbehaftet ein.

Vorzugsweise weist der Innenring auf der den Wälzkörpern zugewandten Seite zumindest teilweise eine Mitnehmergeometrie, besonders bevorzugt eine Spiralgeometrie, auf.

Vorzugsweise ist die Antriebswelle zumindest teilweise in der Abtriebwelle gelagert.

Ein weiterer erfindungsgemäßer oder bevorzugter Gegenstand der vorliegenden Erfindung ist eine Verstelleinrichtung zur Durchführung mindestens einer Verstellfunktion, insbesondere zur Verstellung eines Kraftfahrzeugsitzes, mit einem Antrieb und einem Abtrieb und einer Bremseinrichtung, welche von dem Abtrieb auf den Antrieb einwirkende Drehmomente weitestgehend abhält, wobei die Lagerung für den Abtrieb und die Bremseinrichtung in einem Gehäuse angeordnet ist.

Bei dieser Verstelleinrichtung wird demnach ein Drehmoment von dem Antrieb auf den Abtrieb weitergeleitet, jedoch ein auf den Abtrieb einwirkendes Drehmoment mit einer Bremseinrichtung abgebremst.

Erfindungsgemäß ist die Lagerung für den Abtrieb, insbesondere dessen Radiallager, und für die Bremseinrichtung, insbesondere das Axial- und Radiallager für die Wälzkörper, in einem Gehäuse angeordnet. Dadurch ergibt sich ein geringerer Raumbedarf und/oder es werden vorzugsweise lediglich drei Wälzkörperpaare anstatt fünf oder sechs wie bisher benötigt.

Vorzugsweise weist das Gehäuse in seinem Randbereich einen Schnappverschluss für ein Verschlusselement auf. Dieser Schnappverschluss wird vorzugsweise durch Kaltverformen des Gehäuses erzeugt. Mit diesem Schnappverschluss wird ein Verschlusselement, beispielsweise ein Deckel an dem Gehäuse befestigt. Gegebenenfalls können das Gehäuse und das Verschlusselement durch zusätzliche Verbindungsmittel wie beispielsweise Schrauben miteinander verbunden werden.

Vorzugsweise weist die Verstelleinrichtung antriebsseitig eine Lagerfläche für eine Handhabe, beispielsweise einen Hebel, auf. Eine derartige Lagerfläche ist beispielsweise eine plane Fläche, auf der sich die Handhabe abstützen kann.

Weiterhin bevorzugt sind antriebsseitig Vorsprünge als Anschlagflächen für die Handhabe vorgesehen. Zwischen diesen Vorsprüngen und der Handhabe ist im Normalfall ein Spalt vorhanden. An diesen Vorsprüngen kann sich die Handhabe jedoch bedarfsweise abstützen. Die Vorsprünge sind vorzugsweise auf einer Kreisbahn um die Lagerfläche der Handhabe herum, in einem gleichmäßigen oder ungleichmäßigen Abstand zueinander angeordnet. Beispielsweise sind die Vorsprünge wie die Zacken einer Krone angeordnet. Besonders bevorzugt mindestens ein Vorsprung, vorzugsweise mehrere Vorsprünge eine Anschlagfläche auf, mit der die Bewegungsfreiheit der Handhabe in eine oder zwei Richtungen einschränkbar ist.

Vorzugsweise ist innerhalb der Vorsprünge ein Federmittel angeordnet, dass rückstellend mit der Handhabe zusammenwirkt. Insbesondere wird die Handhabe unabhängig von deren Drehrichtung durch das Federmittel in ihre Ausgangslage zurückgedrückt. Dadurch, dass das Federmittel innerhalb der Vorsprünge angordnet ist, ist es vor Einwirkungen geschützt und kann auch keine Auswirkungen auf Dritte ausüben.

Vorzugsweise weist ein Vorsprung ein Formschlussmittel für das Federmittel auf, dass dieses an dem Gehäuse zumindest in eine, vorzugsweise zwei Richtungen fixiert.

Vorzugsweise weist die Einrichtung ein Vorspannmittel für das Federmittel auf, so dass dieser an dem Gehäuse gesichert ist und/oder keine Geräuschentwicklung auftritt.

Vorzugsweise ist an der Handhabe ein Mitnahmemittel für das Federmittel angeordnet. Mit dieser Mitnahme kann das Federmittel vorzugsweise in zwei Richtungen gespannt werden. Besonders bevorzugt wirkt dieses Mitnahmemittel mit den Anschlagflächen der Vorsprünge zusammen, um die Bewegung der Handhabe zu begrenzen.

Im folgenden wird die Erfindung anhand der Figuren 1 - 21 erläutert. Diese Erläuterungen sind lediglich beispielhaft und gelten für alle Gegenstände der vorliegenden Erfindung gleichermaßen.
- Figur 1: zeigt das Gehäuse der Verstelleinrichtung.
- Figur 2: zeigt eine Explosionszeichnung der erfindungsgemäßen Verstelleinrichtung.
- Figur 3: zeigt die Bremseinrichtung.
- Figur 4: zeigt den Innenring der Bremseinrichtung sowie das Abtriebsritzel.
- Figur 5: zeigt den Innenring gemäß Figur 4 mit dem Gehäusedeckel.
- Figur 6: zeigt eine weitere Darstellung der Bremseinrichtung mit Bremsring und Bremskörpern.
- Figur 7: zeigt den Planetenträger auf der Bremseinrichtung.
- Figur 8: zeigt die Planetenräder auf dem Planetenträger.
- Figur 9: zeigt die Antriebswelle für die Planetenräder.
- Figur 10: zeigt das Gehäuse von der Antriebsseite.
- Figur 11: zeigt das Gehäuse von der Abtriebsseite.
- Figur 12: zeigt eine weitere Darstellung der Bremseinrichtung
- Figur 13: zeigt eine alternative Ausführungsform der Bremseinrichtung gemäß Figur 12
- Figur 14: zeigt eine weitere Explosionszeichnung der erfindungsgemäßen Verstelleinrichtung.
- Figur 15: zeigt zwei Ansichten des Gehäuses.
- Figur 16: zeigt das Zusammenspiel der Wälzkörper mit dem Gehäuse.
- Figur 17: zeigt den Schnappverschluss zwischen Gehäuse und Deckel in zwei Ansichten.
- Figur 18: zeigt die Antriebsseite der erfindungsgemäßen Verstelleinrichtung.
- Figur 19: zeigt die an der Einrichtung angeordnete Handhabe.
- Figur 20: zeigt eine weitere Ansicht der Verstelleinrichtung mit der Handhabe.
- Figur 21: zeigt eine 3-D-Darstellung der Antriebsseite der erfindungsgemäßen Verstelleinrichtung.

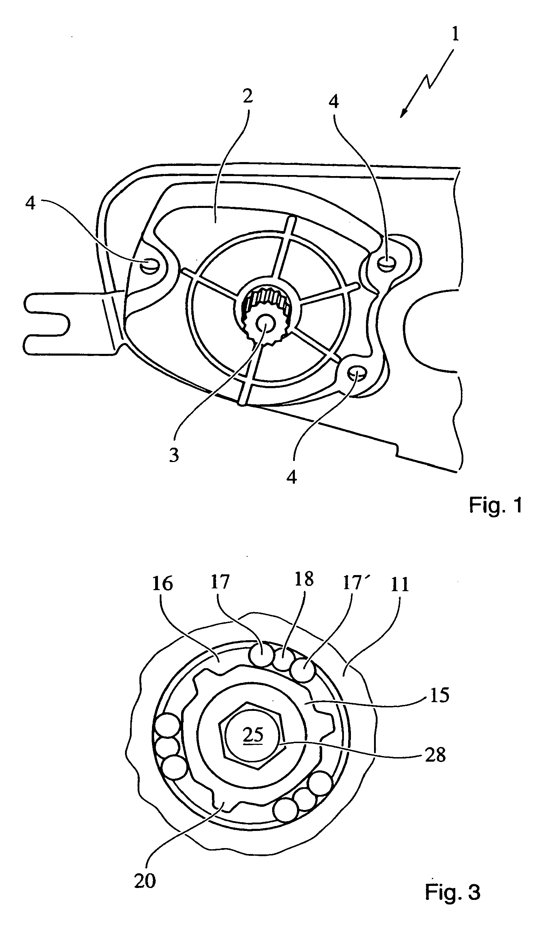

Die in den folgenden Figuren beispielhaft und schematisch dargestellte Verstelleinrichtung 1 weist ein verripptes Gehäuse 2 beispielsweise aus Kunststoff 2, aus welchem die mit einer feinen Verzahnung versehene und im Gehäuse 2 gelagerte Antriebswelle 3 herausragt (Fig. 1). Auf diese Verzahnung kann später ein Handrad zur manuellen Betätigung der Verstelleinrichtung 1 aufgesteckt oder ein Motor angeschlossen werden. Das Gehäuse 2 weist ferner Bohrungen 4 zur Befestigung der Verstelleinrichtung 1 auf, beispielsweise an dem seitlichen Träger der Metallstruktur eines Sitzteils.

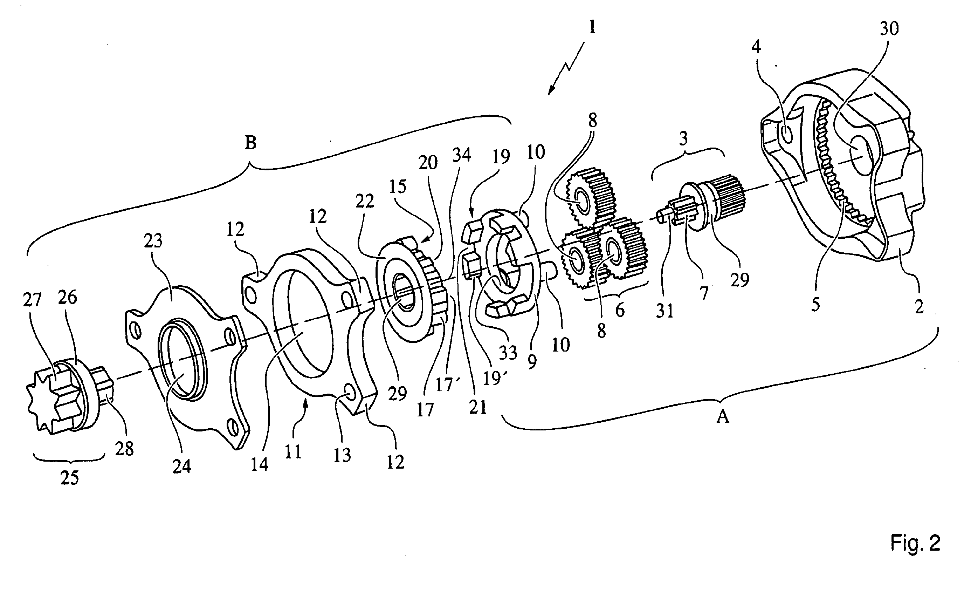

Wie aus Fig. 2 ersichtlich, ist das Gehäuse 2 innenseitig mit einer koaxial zur Antriebswelle 3 verlaufenden Innenverzahnung 5 versehen, in welcher drei Planetenzahnräder 6 um eine in das Gehäuse 2 hineinragende Außenverzahnung 7 der Antriebswelle 3 umlaufen. Bei einer Drehung der Antriebswelle 3 wandern die Achsen 8 der Planetenzahnräder 6 somit im Gehäuse 2 mit einer gegenüber der Antriebswelle 3 verringerten Drehzahl auf einer Kreisbahn. Die Antriebswelle 3 kann ein Kompensationsmittel, beispielsweise einen Kompensationsring aufweisen, mit dem Fertigungstolleranzen ausgeglichen, Geräusche vermindert und/oder ein fühlbarer Drehwiderstand erzeugt wird. Die Drehung der Antriebswelle 3 wird von einem ringförmigen Planetenträger 9 aufgenommen, der koaxial zur Antriebswelle 3 drehbar ist. Der Planetenträger weist aus seiner Axialfläche parallel zu seiner Drehachse in Richtung der Planetenzahnräder 6 auskragende Achsbolzen 10 auf.

Auf diesen Achsbolzen 10 sind die Planetenzahnräder 6 drehbar gelagert. Die zuvor beschriebenen Bauteile (Baugruppe A) bilden somit ein Planetengetriebe aus. Das Planetengetriebe ist in zwei Drehrichtungen drehbar.

Der Planetenträger 9 ist die Schnittstelle zu einer freilaufartigen Bremseinrichtung (Baugruppe B), welche von der Abtriebsseite her auf die Verstelleinrichtung 1 einwirkende Drehmomente von dem Planetengetriebe (Baugruppe A) möglichst vollständig fernhalten soll. Diese Drehmomente können in zwei Drehrichtungen wirken. Die Baugruppe 13 besteht aus einem aus Stahlblech gestanzten Bremsring 11, der sich nach außen erstreckende Laschen 12 aufweist. Der Bremsring 11 wird in das komplementär geformte Gehäuse 2 eingeschoben, wobei sich Bohrungen 13 in den Laschen 12 mit den Bohrungen 4 des Gehäuses 2 decken. Der Bremsring 11 ist ferner mit einer kreisförmigen Ausnehmung 14 versehen, welche koaxial zur Antriebswelle 3 verläuft und den Innenring 15 der Bremseinrichtung aufnimmt.

Im Spalt 16 zwischen dem Bremsring 11 und dem Innenring 15 (siehe Fig. 3) sind paarweise zylinderförmige Wälzkörper 17, 17 angeordnet, wobei die Wälzkörper 17, 17' jedes Paares durch einen dazwischen liegenden, als Federmittel wirkenden Elastomerkörper 18 auseinander gespreizt werden. Der Fachmann erkennt, dass es sich aber auch um jedes beliebige andere Federmittel, beispielweise eine Spiralfeder handeln kann. Der Außenumfang des Innenrings 15 ist derart gestaltet, dass der Spalt 16 im Bereich jedes Elastomerblocks 18 größer als der Durchmesser der gleichartigen Wälzkörper 17, 17' ausgebildet ist, sich jedoch vom Elastomerblock 18 weg auf eine Höhe kleiner dem Durchmesser der Wälzkörper 17, 17' verengt. Jedes Paar von Wälzkörpern 17, 17' ist somit in einem Teilumfang des Spalts 16 gefangen. Bei der Drehung des Innenrings 15 relativ zum Bremsring 11 verklemmt sich, aufgrund einer Spiralgeometrie 36 an dem Innenrings 15 zum Wälzkörper 17, 17'hin, jeweils ein Wälzkörper 17 eines Paares im sich verengenden Bereich des Spalts 16, so dass eine weitere Drehung verhindert wird. Bei der Drehung des Innenrings 15 in Gegenrichtung erfolgt das Verklemmen durch den anderen Wälzkörper 17' des Paares. Somit wird verhindert, dass signifikante Drehmomente, die bei einem Unfall auftreten, auf das Planetengetriebe übertragen werden.

Der Planetenträger 9 ist auf seiner der Baugruppe A abgewandten Seite mit paarweisen Vorsprüngen 19, 19' ausgestattet, welche zwischen den Paaren von Wälzkörpern 17, 17' in den Spalt 16 hineinragen. Die Zwischenräume 21 zwischen jedem Paar von Vorsprüngen 19, 19' wirken spielbehaftet mit Ansätzen 20 auf dem Außenumfang des Innenrings 15 zusammen, während die den Zwischenräumen 21 abgewandten Flächen der Vorsprünge 19, 19' bei Drehung des Innenrings 15 alternativ auf die Wälzkörper 17, 17' einwirken. Bei der Drehung des Innenrings 15 werden hierdurch zunächst die verklemmten Wälzkörper 17, 17' gelöst, wobei das Spiel zwischen den Vorsprüngen 19 jedes Paares und den Ansätzen 20 aufgebraucht wird. Sobald jeder Vorsprung 19 am zugeordneten Ansatz 20 anliegt, wird unmittelbar ein Drehmoment vom Planetenträger 9 auf den Innenring 15 übertragen. Bei einer Drehung in Gegenrichtung erfolgt dies sinngemäß durch einen Kontakt zwischen den Ansätzen 20 und den Vorsprüngen 19'.

Auf dem Innenring 15 ist auf der der Baugruppe A abgewandten Seite eine Anlaufscheibe 22 angeordnet, welche sich mit dem Innenring 15 dreht und an dem Gehäusedeckel 23 anliegt. Die Außenkontur des mit dem Gehäuse 2 verrastbaren Gehäusedeckels 23 ist deckungsgleich zum Bremsring 11 ausgebildet, so dass diese in gleicher Weise in das Gehäuse 2 eingesetzt werden können. Der Gehäusedeckel 23 ist mit einem koaxial zur Antriebswelle 2 ausgerichteten Durchzug 24 versehen, in welchem die Abtriebswelle 25 gelagert ist. In diesem Fall ist der Gehäusedeckel vorzugsweise aus einem metallischen Werkstoff gefertigt. Der Gehäusedeckel kann jedoch aus Kunststoff gefertigt sein für den Fall, dass er lediglich als Schutz benötigt wird. Der Gehäusedeckel wird an der vormontierten Einheit form- und/oder kraftschlüssig angebracht, beispielsweise angeschraubt oder angenietet. Vorzugsweise wird der Deckel 23 jedoch mit einem Schnellverschluss, beispielsweise einem Schnappverschluss, an dem Gehäuse 4 angebracht Die zur Antriebswelle 3 koaxial verlaufende Abtriebswelle 25 weist einen zur Lagerung geeigneten Zylinderbereich 26 auf, an den sich nach außen das Abtriebsritzel 27 anschließt. Auf der gegenüber liegenden Seite ist die Abtriebswelle 25 mit einem Polygonprofil 28 versehen, welches spielfrei in eine komplementär gestaltete Ausnehmung 29 im Innenring 15 eingreift. Der Fachmann erkennt, dass die Abtriebwelle 25 und der Innenring 15 einteilig ausgeführt sein können.

Bei Betätigung der Verstelleinrichtung 1 wird das Antriebsmoment somit über die Antriebswelle 3, die Planetenzahnräder 6 und den Planetenträger 9 auf den Innenring 15 und von dort auf das Abtriebsritzel 25 übertragen. Ein von der Abtriebsseite her wirkendes Drehmoment wird über die Abtriebswelle 25 auf den Innenring 15 übertragen und nachfolgend durch Verklemmen der Wälzkörper 17 oder 17' vom Bremsring 11 abgefangen. Planententräger 9, Planentenzahnräder 6 und Gehäuse 2 werden hierdurch entlastet und können entsprechend schwächer dimensioniert werden.

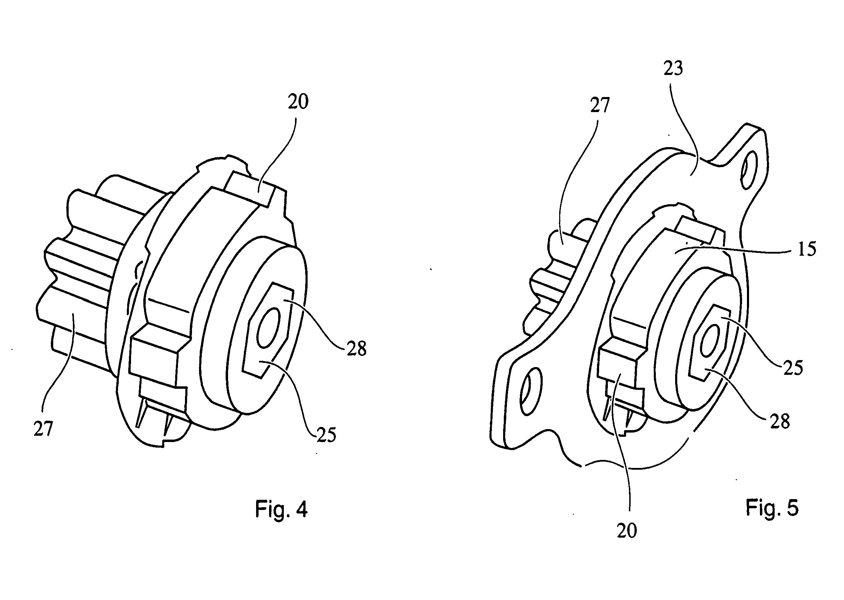

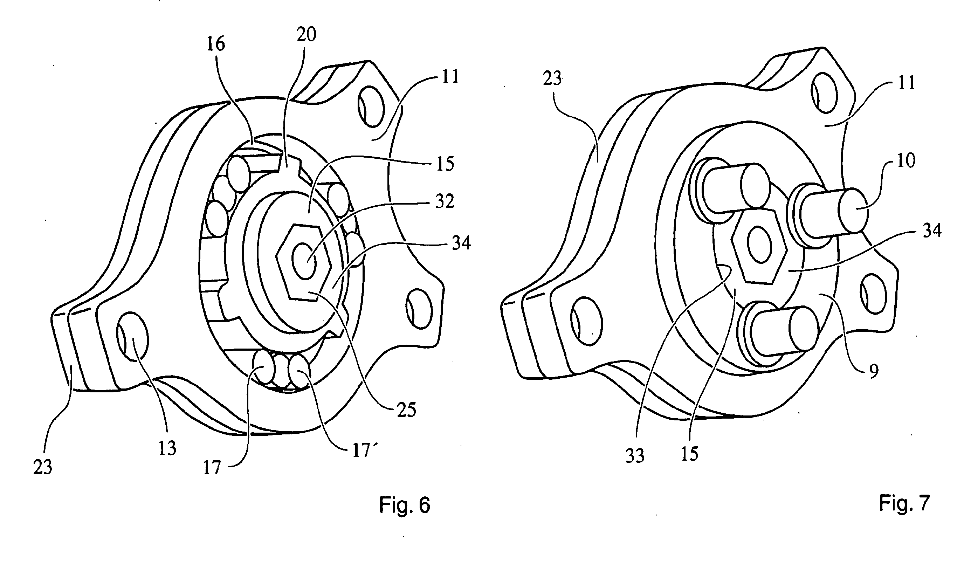

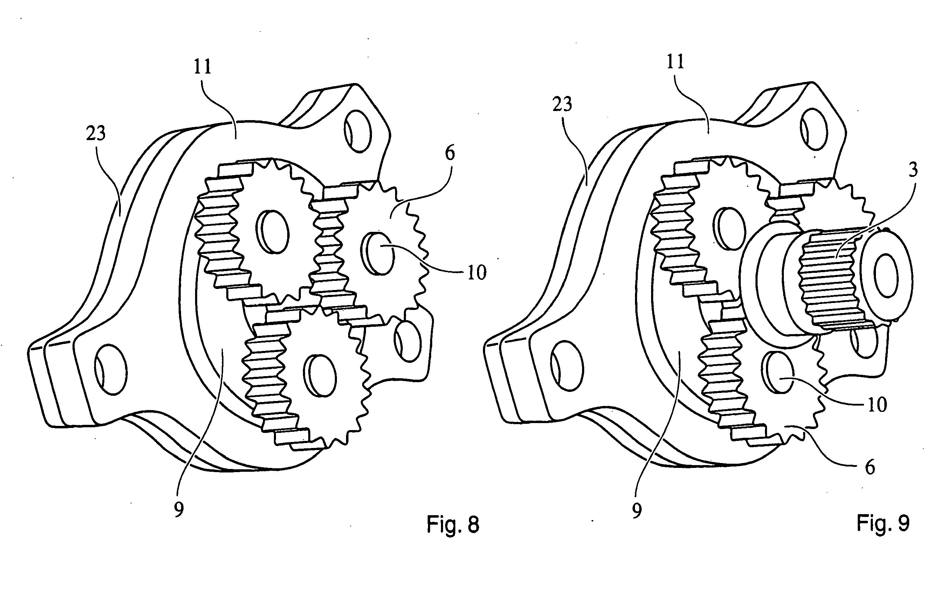

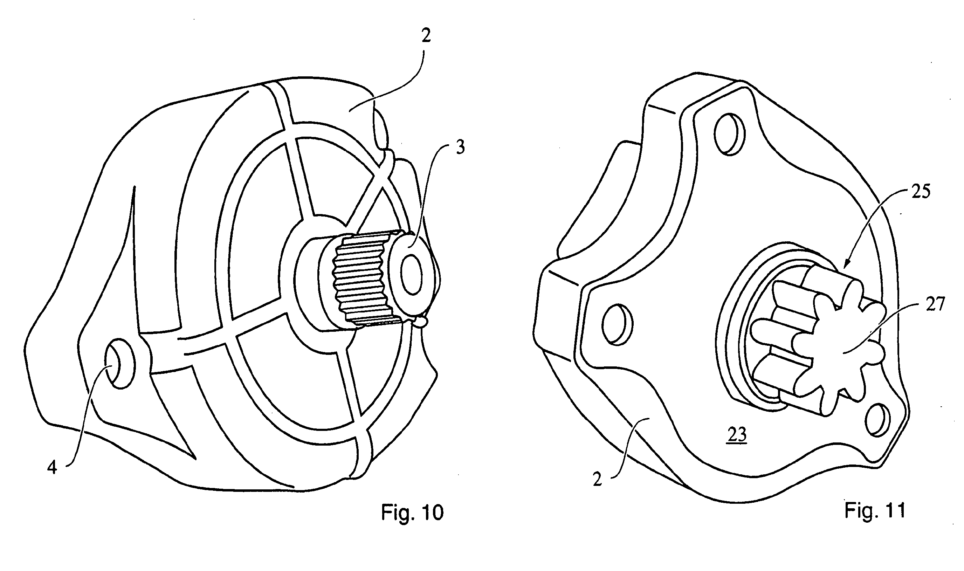

Die Figuren 4 bis 9 zeigen verschiedene Konfigurationen von Bauteilen der Verstelleinrichtung 1 zueinander, wobei jeweils andere Bauteile ausgeblendet sind. Fig. 10 und 11 zeigen eine vordere oder hintere Ansicht der vormontierten Versteileinrichtung 1.

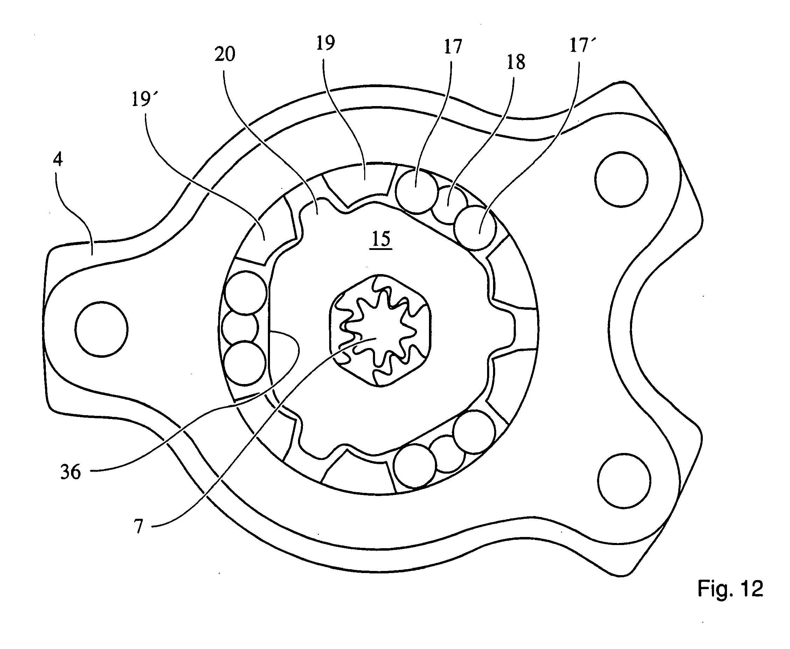

Figur 12 zeigt eine weitere Darstellung der Bremseinrichtung gemäß Figur 3. Es ist deutlich zu erkennen, wie der Vorsprung 20 zwischen jeweils zwei die Form- und/oder Kraftschlussmittel 19, 19' eingreift.

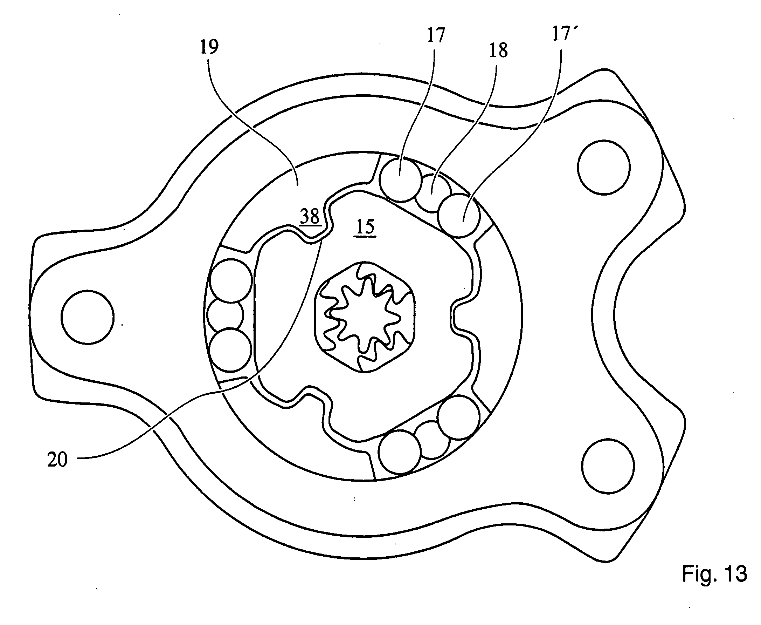

Figur 13 zeigt eine andere Ausführungsform der Bremseinrichtung. In dem vorliegenden Fall ist das Form- und/oder Kraftschlussmittel 19 einteilig ausgeführt und weist einen Vorsprung, beispielsweise eine Nase 38 auf, die in eine Vertiefung 20 an dem Innenring 15 form- und/oder kraftschlüssig zusammenwirkt und das Kraftschlussmittel jeweils antreibt.

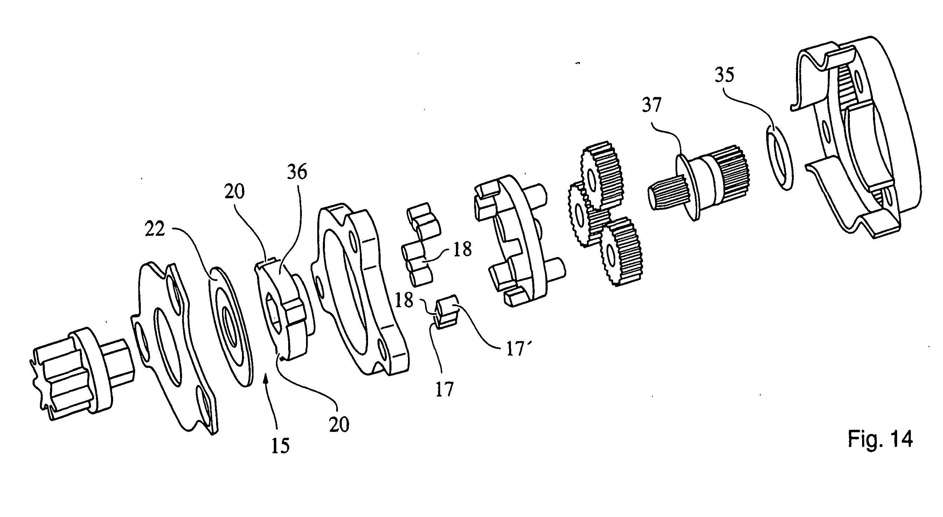

Figur 14 zeigt eine weitere Darstellung der Explosionszeichnung gemäß Figur 2. Deutlich ist der Kompensationsring 35 zu erkennen, der an der Schulter 37 anliegt und die Antriebswelle 3 umschließt. Weiterhin ist die Spiralgeometrie 36 an der Außenseite des Innenrings zu sehen. Ansonsten wird auf die Ausführungen zu Figur 2 verwiesen.

Die Lagerung der einzelnen Bauteile der Verstelleinrichtung 1 ist wie folgt gestaltet: Die Antriebswelle 3 ist über einen jenseits der Außenverzahnung 7 befindlichen zylinderförmigen Bereich 29 in einer Bohrung 30 im Gehäuse 2 sowie über einen diesseits der Außenverzahnung 7 hervorstehenden, einstückig angeformten Bolzen 31 in einer Bohrung 32 im Abtriebsritzel 25 gelagert. Der Planetenträger 9 lagert mit seinem Innenumfang 33 auf der äußeren Radialfläche eines Ringvorsprungs 34 des Innenrings 15. Die Abtriebswelle 25 ist über den Bereich 26 im Gehäusedeckel 23 und darüber hinaus über das Polyprofil 28 im Innenring 15 gelagert. Der Innenring 15 ist seinerseits über die Wälzkörper 17, 1 T relativ zum Bremsring 11 ausgerichtet.

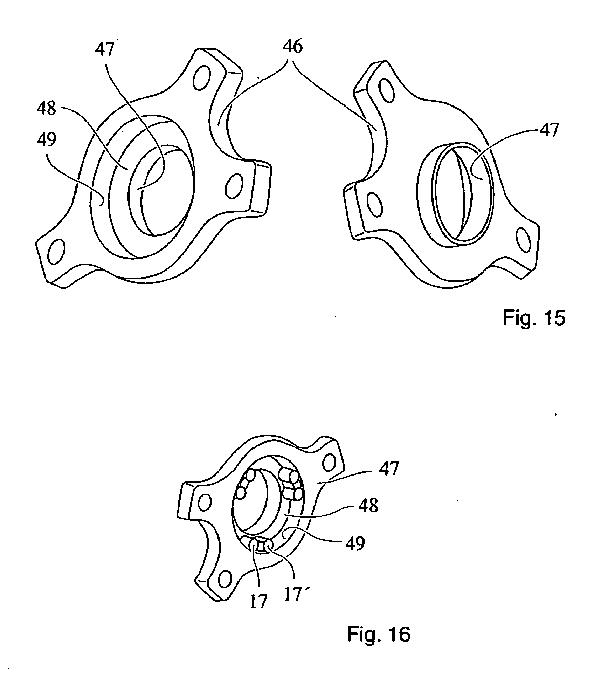

Figur 15 zeigt das Gehäuse 46 der erfindungsgemäßen Verstelleinrichtung. Dieses weist eine radiale Anlagefläche 47 für das Abtriebsritzel sowie eine axiale Anlagefläche 48 sowie eine radiale Anlagefläche 49 für die Wälzkörper 17, 17' auf. Durch die kompakte Bauweise des Gehäuses ist es, wie in Figur 16 dargestellt, möglich, eine Verstelleinrichtung mit lediglich drei Wälzkörperpaaren 17, 17' zur Verfügung zu stellen und mit diesen drei Wälzkörperpaaren alle auftretenden Kräfte und Momente aufzunehmen und an das Gehäuse weiterzuleiten.

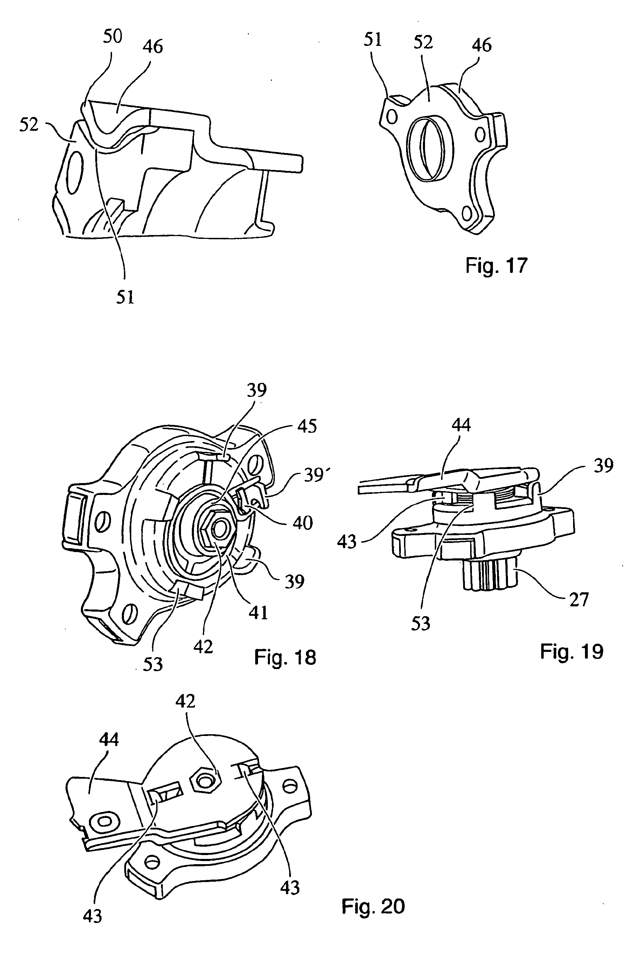

Figur 17 zeigt das Gehäuse 46, dass mit einem Deckel 52 versehen ist. An dem Rand des Gehäuses 46 ist durch kaltverformen ein Verbindungsmittel 50 hergestellt worden, dass klippsend mit dem Deckel 52 zusammenwirkt, der eine Umlaufkante 51 aufweist. Durch diesen Schnappverschluss ist es möglich, den Deckel 52 werkzeuglos an dem Gehäuse 46 anzuordnen.

In Figur 18 ist die Antriebsseite der Verstelleinrichtung dargestellt. Diese weist eine Anlagefläche 45 auf, an die eine Handhabe (nicht dargestellt) anlegbar ist, die mittels der Mutter 42 an einer Welle (nicht dargestellt) der Verstelleinrichtung befestigt wird. Desweiteren weist die Antriebsseite der erfindungsgemäßen Verstelleinrichtung fünf Vorsprünge 39 auf, zwischen denen und der Handhabe im Normalfall ein kleiner Spalt vorhanden ist, die jedoch als Anlage für die Handhabe dienen können, um eine Überbelastung der Anlagefläche 45 oder eine ungewollte Drehmomentübertragung auf die erfindungsgemäße Verstelleinrichtung zu vermeiden. Die Vorsprünge 39 sind in dem vorliegenden Fall äquidistal auf einem Kreisring um die Anlagefläche 45 für die Handhabe angeordnet. Dies muss jedoch nicht der Fall sein. Innerhalb dieser Krone von Vorsprüngen 39 ist eine Feder 41 angeordnet, die rückstellend mit der Handhabe zusammenwirkt. Die Vorsprünge 39 stellen einen Schutz für die Feder 41 dar, verhindern jedoch auch, dass sich ein Fahrzeuginsasse an der Feder verietzt. Einer der Vorsprünge 39'weist eine Einkerbung 54 auf, die die Feder 41 in zumindest zwei Richtung sichert. Desweiteren weist die erfindungsgemäße Verstelleinrichtung ein Vorspannmittel 40 auf, dass zum einen die Feder 41 vorspannt aber auch einer weiteren Befestigung der Feder an dem Gehäuse der Verstelleinrichtung dient.

Figur 19 zeigt die an der Verstelleinrichtung angeordnete Handhabe 44. In dem vorliegenden Fall handelt es sich um einen Hebel, der in zwei Drehrichtungen bewegbar ist. Dieser Hebel liegt an der Anlagefläche 45 an und ist mittels der Schraube 42 an der Verstelleinrichtung befestigt. Aus der Handhabe sind die Mitnahmemittel 43 ausgeformt, die sich bei einer Bewegung der Handhabe auf dem Kreisring, auf dem die Vorsprünge angeordnet sind, bewegt. Das in Figur 19 dargestellte Mitnahmemittel wirkt mit der Anschlagfläche 53 der Vorsprünge 39 zusammen und begrenzt die Verstellbarkeit der Handhabe 44 in zwei Richtungen.

Figur 20 zeigt eine weitere Darstellung der Handhabe im Zusammenspiel mit der erfindungsgemäßen Verstelleinrichtung. Aus dieser Ansicht ist zu erkennen, dass aus der Handhabe 44 zwei Mitnahmemittel 43 ausgeformt sind. Während das linke Mitnahmemittel die anhand von Figur 19 erläuterte Funktion aufweist, wirkt das rechte Mitnahmemittel mit den Schenkeln der Feder 41 zusammen und nimmt je nach Drehrichtung einen dieser Schenkel mit und spannt dadurch die Feder 41. Sobald die Handhabe losgelassen wird, stellt die Feder 41 die Handhabe in ihre ursprüngliche Position zurück.

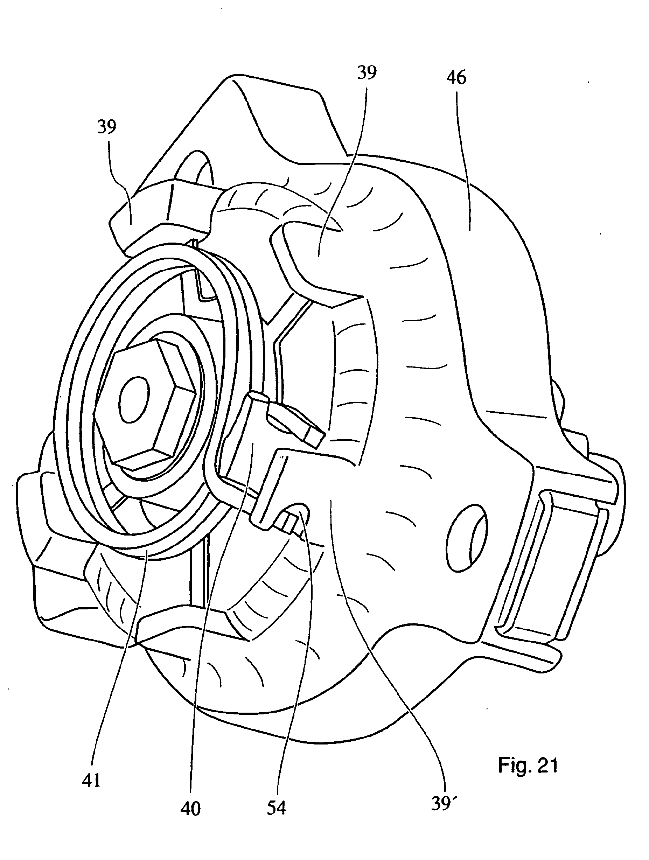

Figur 21 zeigt eine weitere Darstellung der Antriebsseite der erfindungsgemäßen Verstelleinrichtung. Deutlich ist das Formschlussmittel 54 zu sehen, dass einen Schenkel der Feder 41 aufnimmt. Desweiteren ist zu erkennen, dass das Vorspannmittel die Feder 41 nicht nur vorspannt, sondern auch gegen Abheben sichert.

Die in den Figuren 15 bis 21 dargestellte Verstelleinrichtung dient insbesondere zur Höhenverstellung der Sitzfläche eines Kraftfahrzeugsitzes. Der Fachmann erkennt, dass innerhalb des Gehäuses noch ein Freilauf angeordnet sein muss, der bei einer Rückstellung der Handhabe durch das Federmittel 41 verhindert, dass ein Drehmoment auf den Antrieb der Verstelleinrichtung ausgeübt wird.

### Bezugszeichen:

- 1: Verstelleinrichtung
- 2: Gehäuse
- 3: Antriebswelle
- 4: Bohrung
- 5: Innenverzahnung
- 6: Planetenzahnrad
- 7: Außenverzahnung
- 8: Achse
- 9: Planetenträger
- 10: Achsbolzen
- 11: Bremsring
- 12: Lasche
- 13: Bohrung
- 14: Ausnehmung
- 15: Innenring
- 16: Spalt
- 17, 17': Wälzkörper, Bremskörper
- 18: Elastomerblock, Federmittel
- 19, 19': Vorsprung, Einbuchtung, Form- und/oder Kraftschlussmittel
- 20: Ansatz, Vertiefung, Form- und/oder Kraftschlussmittel
- 21: Zwischenraum
- 22: Anlaufscheibe
- 23: Gehäusedeckel
- 24: Durchzug
- 25: Abtriebswelle
- 26: zylinderförmiger Bereich
- 27: Abtriebsritzel
- 28: Polygonprofil
- 29: zylinderförmiger Bereich
- 30: Bohrung
- 31: Bolzen
- 32: Bohrung
- 33: Innenumfang
- 34: Ringvorsprung
- 35: Kompensationsmittel, Kompensationsring
- 36: Mitnehmergeometrie, Spiralgeometrie
- 37: Schulter
- 38: Vorsprung, Nase
- 39, 39': Vorsprung
- 40: Vorspannmittel
- 41: Federmittel
- 42: Befestigungsmittel
- 43: Mitnahmemittel
- 44: Handhabe
- 45: Anlagefläche für die Handhabe
- 46: Gehäuse
- 47: radiale Ritzelanlagefläche
- 48: axiale Wälzkörperanlagefläche
- 49: radiale Wälzkörperanlagefläche
- 50: Schnappverschluss, Clips
- 51: Umlaufkante
- 52: Verschlusselement, Deckel
- 53: Anlagefläche
- 54: Formschlussmittel
- A: Planetenradgetriebe
- B: Bremseinrichtung

## Patentansprüche

1. Verstelleinrichtung (1) zur Durchführung mindestens einer Verstellfunktion, insbesondere zur Verstellung eines Kraftfahrzeugsitzes, mit einem Antrieb in Form eines Planetengetriebes (A), das einen Planetenträger (9) aufweist, und einem Abtrieb (25), der von einer Bremseinrichtung (B) bei nicht betätigtem Antrieb festgesetzt ist, **dadurch gekennzeichnet, dass** der Planetenträger so mit der Bremseinrichtung zusammenwirkt, dass diese wahlweise lösbar ist und dass der Planetenträger (9) Mittel (19, 19') aufweist, die mit Bremskörpern (17, 17') der Bremseinrichtung entriegelnd zusammenwirken.

2. Verstelleinrichtung nach Anspruch 1 **dadurch gekennzeichnet, dass** die Bremseinrichtung in zwei Drehrichtungen wirkt.

3. Verstelleinrichtung nach einem der voranstehenden Ansprüche, **dadurch gekennzeichnet, dass** die Bremseinrichtung einen Bremsring (11) und einen Innenring (15) aufweist, zwischen denen sich ein Spalt (16) befindet, in dem mindestens ein Bremskörper (17, 17') angeordnet ist.

4. Verstelleinrichtung nach Anspruch 3, **dadurch gekennzeichnet, dass** Bremskörper (17, 17') paarweise angeordnet sind und jeweils ein Federmittel (18) aufweist, das zwischen den Bremskörpern (17, 17') angeordnet ist.

5. Verstelleinrichtung nach einem der voranstehenden Ansprüche, **dadurch gekennzeichnet, dass** die Mittel (19, 19') des Planetenträgers Vorsprünge oder Vertiefungen (19, 19') sind.

6. Verstelleinrichtung nach Anspruch 5, **dadurch gekennzeichnet, dass** der Planetenträger (9) mehrere paarweise angeordnete Vorsprünge (19, 19') aufweist und zwischen zwei Paaren von Vorsprüngen (19, 19') jeweils ein Zwischenraum (21) vorhanden ist.

7. Verstelleinrichtung nach Anspruch 6, **dadurch gekennzeichnet, dass** in die Zwischenräumen (21) Ansätze (20) an dem Innenring (15) spielbehaftet eingreifen.

8. Verstelleinrichtung nach einem der Ansprüche 3 - 7, **dadurch gekennzeichnet, dass** der Innenring (15) auf der den Wälzkörpern zugewandten Seite zumindest teilweise eine Mitnehmergeometrie (36), vorzugsweise eine Spiralgeometrie, aufweist.

9. Verstelleinrichtung nach einem der voranstehenden Ansprüche, **dadurch gekennzeichnet, dass** eine Antriebswelle (3) zumindest teilweise in einer Abtriebswelle (25) gelagert ist.

10. Verstelleinrichtung (1) nach einem der voranstehenden Ansprüche, **dadurch gekennzeichnet, dass** in einem Gehäuse (46) eine Lagerung für den Abtrieb (27) und die Bremseinrichtung (B) angeordnet ist.

11. Verstelleinrichtung nach Anspruch 10, **dadurch gekennzeichnet, dass** an dem Gehäuse (2, 46) ein Schnappverschluss für ein Verschlusselement (52) angeordnet ist.

12. Verstelleinrichtung nach einem der voranstehenden Ansprüche, **dadurch gekennzeichnet, dass** antriebsseitig eine Lagerfläche (45) für eine Handhabe (44) vorgesehen ist.

13. Verstelleinrichtung nach einem der voranstehenden Ansprüche, **dadurch gekennzeichnet, dass** antriebsseitig Vorsprünge (39) als Anschlagflächen für eine Handhabe (44) vorgesehen sind.

14. Verstelleinrichtung nach Anspruch 13, **dadurch gekennzeichnet, dass** innerhalb der Vorsprünge (39) ein Federmittel (41) angeordnet ist, dass rückstellend mit der Handhabe zusammenwirkt.

15. Verstelleinrichtung nach Anspruch 13 oder 14, **dadurch gekennzeichnet, dass** ein Vorsprung (39') Formschlussmittel (54) für das Federmittel aufweist.

16. Verstelleinrichtung nach einem der Ansprüche 13 - 15, **dadurch gekennzeichnet, dass** sie ein Vorspannmittel (40) für das Federmittel (41) aufweist.

17. Verstelleinrichtung nach einem der voranstehenden Ansprüche, **dadurch gekennzeichnet, dass** an der Handhabe (44) ein Mitnahmemittel (43) für das Federmittel (41) angeordnet ist.

## Claims

1. Adjustment device (1) for carrying out at least one adjustment function, in particular for adjusting a motor vehicle seat, having a drive in the form of a planetary gear mechanism (A), which has a planet carrier (9) and an output (25) which is stopped by a brake device (B) when the drive is not actuated, **characterized in that** the planet carrier cooperates with the brake device such that said brake device is optionally releasable and **in that** the planet carrier (9) comprises means (19, 19'), which cooperate with brake bodies (17, 17') of the brake device in an unlocking manner.

2. Adjustment device according to Claim 1, **characterized in that** the brake device acts in two rotational directions.

3. Adjustment device according to one of the preceding claims, **characterized in that** the brake device comprises a brake ring (11) and an inner ring (15), between which a gap (16) is located in which at least one brake body (17, 17') is arranged.

4. Adjustment device according to Claim 3, **characterized in that** brake bodies (17, 17') are arranged in pairs and respectively comprise a spring means (18) which is arranged between the brake bodies (17, 17').

5. Adjustment device according to one of the preceding claims, **characterized in that** the means (19, 19') of the planet carrier are projections or recesses (19, 19').

6. Adjustment device according to Claim 5, **characterized in that** the planet carrier (9) comprises a plurality of projections (19, 19') arranged in pairs, and between two pairs of projections (19, 19') one respective intermediate space (21) is present.

7. Adjustment device according to Claim 6, **characterized in that** extensions (20) on the inner ring (15) engage in the intermediate spaces (21) with clearance.

8. Adjustment device according to one of Claims 3-7, **characterized in that** the inner ring (15) on the side facing the rolling bodies comprises at least partially a drive geometry (36), preferably a spiral geometry.

9. Adjustment device according to one of the preceding claims, **characterized in that** a drive shaft (3) is mounted at least partially in an output shaft (25).

10. Adjustment device (1) according to one of the preceding claims, **characterized in that** a bearing arrangement for the output (27) and the brake device (B) is arranged in a housing (46).

11. Adjustment device according to Claim 10, **characterized in that** on the housing (2, 46) a snap closure is arranged for a closure element (52).

12. Adjustment device according to one of the preceding claims, **characterized in that** on the drive side a bearing surface (45) is provided for a handle (44).

13. Adjustment device according to one of the preceding claims, **characterized in that** on the drive side projections (39) are provided as stop surfaces for a handle (44).

14. Adjustment device according to Claim 13, **characterized in that** within the projections (39) a spring means (41) is arranged which cooperates in a resettable manner with the handle.

15. Adjustment device according to Claim 13 or 14, **characterized in that** a projection (39') comprises positive connecting means (54) for the spring means.

16. Adjustment device according to one of Claims 13-15, **characterized in that** it comprises a pretensioning means (40) for the spring means (41).

17. Adjustment device according to one of the preceding claims, **characterized in that** a drive means (43) is arranged for the spring means (41) on the handle (44).

## Revendications

1. Dispositif de réglage (1) permettant de mettre en oeuvre au moins une fonction de réglage, notamment en vue de régler un siège de véhicule automobile, avec un entraînement en entrée prenant la forme d'un engrenage planétaire (A) comportant un support planétaire (9) et avec un entraînement en sortie (25) arrêté par un dispositif de freinage (B) en cas d'entraînement en entrée non actionné, **caractérisé en ce que** le support planétaire interagit de telle sorte avec le dispositif de freinage que celui-ci peut être détaché en option et que le support planétaire (9) comporte des moyens (19, 19') entrant en interaction selon un mode déverrouillé avec les corps de frein (17, 17') du dispositif de freinage.

2. Dispositif de réglage selon la revendication 1, **caractérisé en ce que** le dispositif de freinage agit dans deux directions de rotation.

3. Dispositif de réglage selon l'une quelconque des revendications précédentes, **caractérisé en ce que** le dispositif de freinage comporte une bague de freinage (11) et une bague intérieure (15) entre lesquelles se trouve un interstice (16) dans lequel au moins un corps de frein (17, 17') est disposé.

4. Dispositif de réglage selon la revendication 3, **caractérisé en ce que** les corps de frein (17, 17') sont disposés par paire et comportent respectivement un moyen de ressort (18) disposé entre les corps de frein (17, 17').

5. Dispositif de réglage selon l'une quelconque des revendications précédentes, **caractérisé en ce que** les moyens (19, 19') du support planétaire sont des saillies ou des renfoncements (19, 19').

6. Dispositif de réglage selon la revendication 5, **caractérisé en ce que** le support planétaire (9) comporte plusieurs saillies (19, 19') disposées par paire et qu'un espace intermédiaire (21) est respectivement présent entre deux paires de saillies (19, 19').

7. Dispositif de réglage selon la revendication 6, **caractérisé en ce que** des appendices (20) s'emboîtent avec du jeu dans les espaces intermédiaires (21), au niveau de la bague intérieure (15).

8. Dispositif de réglage selon l'une quelconque des revendications 3 à 7, **caractérisé en ce que** la bague intérieure (15) présente au moins en partie une forme de doigt d'entraînement (36), de préférence une forme de spirale, sur le côté orienté vers les corps de rouleau.

9. Dispositif de réglage selon l'une quelconque des revendications précédentes, **caractérisé en ce qu'**un arbre d'entraînement en entrée (3) est disposé au moins en partie dans un arbre d'entraînement en sortie (25).

10. Dispositif de réglage (1) selon l'une quelconque des revendications précédentes, **caractérisé en ce qu'**un palier prévu pour l'entraînement en sortie (27) et le dispositif de freinage (B) est disposé dans un carter (46).

11. Dispositif de réglage selon la revendication 10, **caractérisé en ce qu'**une fermeture à déclic prévue pour un élément de fermeture (52) est disposée au niveau du carter (2, 46).

12. Dispositif de réglage selon l'une quelconque des revendications précédentes, **caractérisé en ce qu'**une surface de palier de roulement (45) est prévue pour une poignée (44) située du côté d'entraînement en entrée.

13. Dispositif de réglage selon l'une quelconque des revendications précédentes, **caractérisé en ce que** des saillies (39) prenant la forme de surfaces de butée sont prévues du côté d'entraînement en entrée pour une poignée (44).

14. Dispositif de réglage selon la revendication 13, **caractérisé en ce qu'**un moyen de ressort (41) est disposé à l'intérieur des saillies (39), ledit moyen entrant en interaction avec la poignée.

15. Dispositif de réglage selon la revendication 13 ou 14, **caractérisé en ce qu'**une saillie (39') comporte des moyens de complémentarité de formes (54) prévus pour le moyen de ressort.

16. Dispositif de réglage selon l'une quelconque des revendications 13 à 15, **caractérisé en ce qu'**il comporte un moyen de précontrainte (40) prévu pour le moyen de ressort (41).

17. Dispositif de réglage selon l'une quelconque des revendications précédentes, **caractérisé en ce qu'**un moyen de préhension (43) est disposé au niveau de la poignée (44) pour le moyen de ressort (41).
